# EUROPEAN PATENT APPLICATION

(11) **EP 3 563 978 A1**
(43) Date of publication of application: **06.11.2019**
(21) Application number: 19154046.7
(22) Date of filing: 28.01.2019
(51) Int. Cl.: B25H 3/02

(54) **STACK OF CASES**

(30) Priority: 05.02.2018 ES 201830152 U
(71) Applicant: Plasbox, S.L., 43720 L'Arboç (ES)
(72) Inventor: PONS PONS, Francisco Jose, 08960 Sant Just Desvern (Barcelona) (ES); LECLEIRE, David Daniel, 08210 Barbera Del Valles (Barcelona) (ES); ROVIRA AGUILAR, Magdalena, 08720 Vilafranca Del Penedes (Barcelona) (ES)
(74) Representative: Durán-Corretjer, S.L.P.

(57) **Abstract**

Stack of at least two cases made of blow-moulded plastics, each case comprising at least a bottom part, a top part, said bottom and top parts having a blow-moulded plastics double wall, and a closure mechanism between the two parts, wherein it has locking means for joining said two cases, and wherein said bottom and top parts of said cases have an arrangement of contact points at which the two walls forming said double wall come into contact or remain at a distance of less than 1 mm from each other.

## Description

The present invention relates to the field of cases made of blow-moulded plastics.

Cases or chests made of blow-moulded plastics are generally used to store and transport machine tools, among other applications. One advantage they have over cases made of injection-moulded plastics is that they allow small batches of large cases to be produced at economically competitive costs.

Structurally, cases made of blow-moulded plastics differ from those made of injection-moulded plastics in that they are formed by a bottom part and a further, top part that are joined together by means of a case closure system, both the bottom and top part having a double-wall structure. By contrast, in cases made of injection-moulded plastics, the top and bottom parts are formed by a single-wall plastics body produced by injection moulding.

However, cases made of blow-moulded plastics do have some drawbacks. One of the disadvantages is that the dimensions of the case or chest are increased while the wall is weakened, which prevents the cases being stacked when they contain heavy items (such as tools and machine tools). Another disadvantage is that their dimensional tolerances are greater than those of designs made of injection-moulded plastics. This makes it difficult to implement systems for securing cases together, meaning that complex designs have to be used.

Due to the aforementioned disadvantages, the market currently does not contain any systems of cases made of blow-moulded plastics that can be stacked and transported in stacked form.

However, case and chest stacking systems are known for other materials, including injection-moulded plastics. US6371320B2 discloses a system of stackable single-wall chests made of injection-moulded plastics. The chests are stackable and have a latching system for joining the stackable chests together, meaning they can be moved in stacked form. The latching system comprises a specific part that is joined to adjacent chests.

DE102007032382A1 discloses a system of stackable chests made of injection-moulded plastics, wherein the latch comprises a hinged plastics part, allowing the rotation of the latch hinge to move the plastics part until it engages with a projection on the case above.

An object of the present invention is to disclose a series of improvements to aid the designing of transportable stacks of large cases made of blow-moulded plastics. The improvements set out in the present invention are applicable separately, but have numerous synergistic effects in their various combinations.

Specifically, the present invention discloses a stack of at least two cases made of blow-moulded plastics, each case comprising at least a bottom part, a top part, said bottom and top parts having a blow-moulded plastics double wall, and a closure mechanism between the two parts. The stack has locking means for joining said two cases, and said bottom and top parts of said cases have an arrangement of contact points, the two walls that form said double wall coming into contact with one another at said contact points.

The arrangement of said contact points allows the case to have the required mechanical strength, which is particularly important in the case of large cases with heavy weights to bear.

Preferably, the locking means for joining said two cases comprise a rotatable handle for locking the cases together that is located on one of the cases and can snap into an associated locking recess in the adjacent case. More preferably, said two cases comprise a handle for locking the cases together and an associated locking recess, thus making it possible to produce stacks of variable numbers of cases and making the assembly modular. Even more preferably, the handle is arranged in a bottom part and the projection is arranged in a top part. Yet more preferably, the associated locking recess is defined by a hook-shaped projection.

However, the use of a rotary handle poses another technological challenge since the working tolerances allow the locking mechanism to open inadvertently when the stack is subjected to lateral forces, as is common when transporting and handling cases. The present invention also discloses a solution to this problem, which is independent of the above-mentioned problem, whereby a set of positioning ridges is arranged on the upper face of the top part of the lowest case in the stack, said ridges being paired in a matched manner with associated positioning recesses in the lower face of the bottom part of the case above, so as to prevent the two cases from sliding relative to one another. To ensure a maximum lock-stabilising effect, said positioning ridges are arranged in a direction parallel to the rotational axis of the handle. Additionally, it is preferable to arrange positioning ridges in a direction perpendicular to the rotational axis of the handle. These ridges are preferably in contact with the aforementioned positioning ridges arranged in a direction perpendicular to the rotational axis of the handle. This arrangement of ridges, particularly when these ridges bring a lateral face of the case into contact with the aforementioned ridges arranged in parallel, allows the cases to self-centre, such that users do not need to worry about positioning the cases before actuating the mechanisms for locking the cases together. To make the assembly modular, all the cases have said positioning ridges and recesses.

To aid understanding, drawings of embodiments of the present invention are appended by way of explanatory, not-limiting example.
Fig. 1 shows a perspective view of an embodiment of a stack according to the present invention.
Fig. 2 shows a perspective view of the stack from the previous figure from a different viewpoint.
Fig. 3 shows a front elevation of said stack.
Fig. 4 shows a rear elevation of said stack.
Fig. 5 shows a side elevation of said stack, in which it is possible to see the mechanism, located on both sides of the stack, for locking the cases together.
Fig. 6 shows two separated cases of the stack, it being possible to see the mechanism for locking the cases together.
Fig. 7 shows an open case of the stack, it being possible to see the contact points.
Fig. 8 is a section through the centre of a case, it being possible to see the contact points.

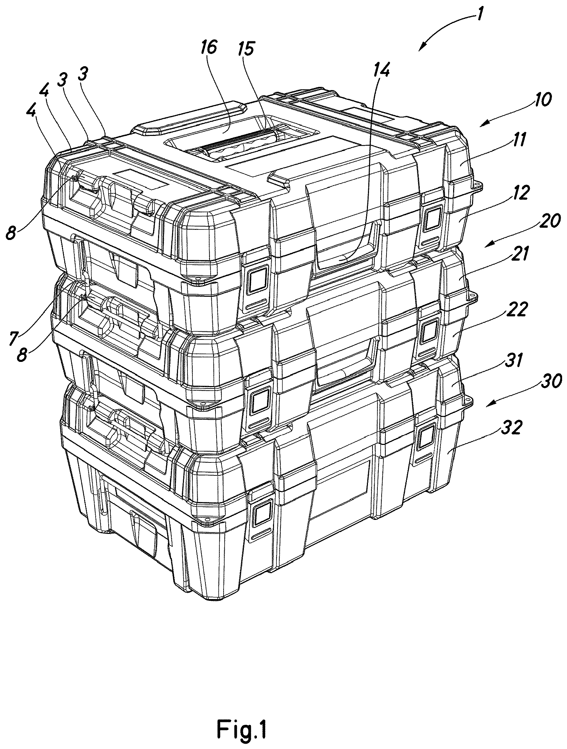

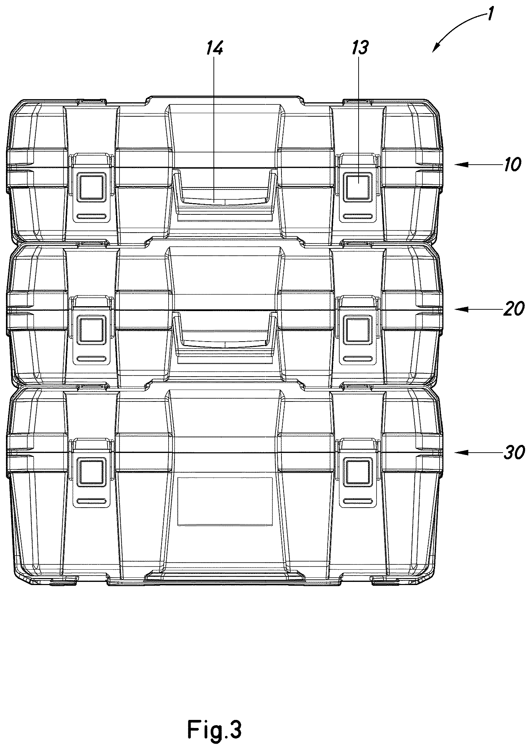

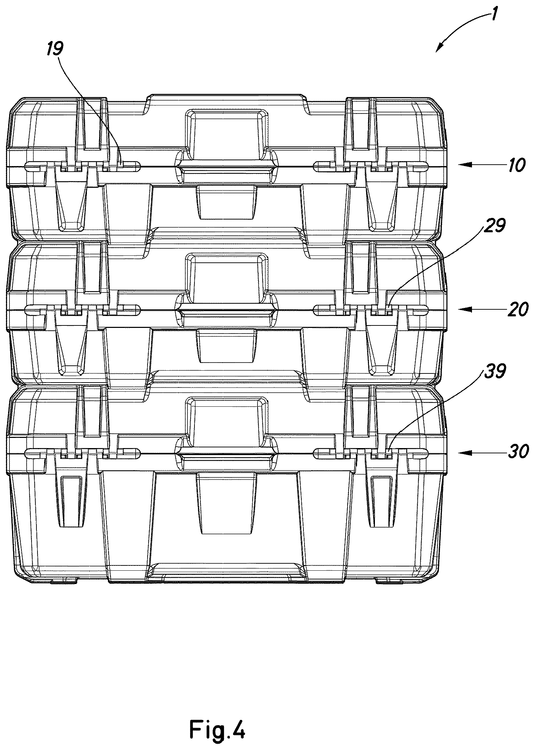

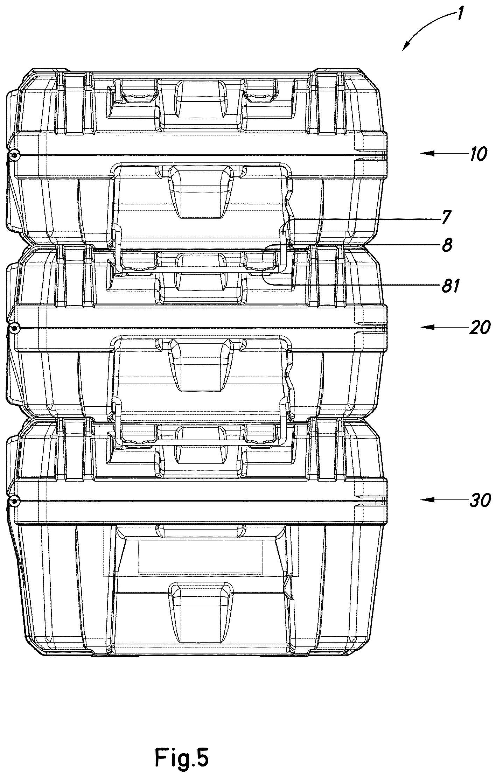

Fig. 1 to 5 show an example stack -1- according to the present invention. The stack shown consists of three cases -10-, -20-, -30- positioned one on top of the other. The cases are made of blow-moulded plastics and thus consist of a top part -11-, -21-, -31- and a bottom part -12-, -22-, -32-. Each of said parts -11-, -12-, 21-, -22-, -31-, -32- has a plastics double wall structure as a result of the blow moulding. Said parts of each case -10-, -20-, -30- are joined at their rear portions by means of a hinge system -19-, -29-, -39- and at their front portions by respective actuable locks -13-. In the case shown, the two upper cases have a transport handle -14- on their front lateral faces, which is stowed away by being rotated. The uppermost case -10- also has an additional transport handle -15- on its top face, which handle can be stored away in the recess -16- by means of rotation.

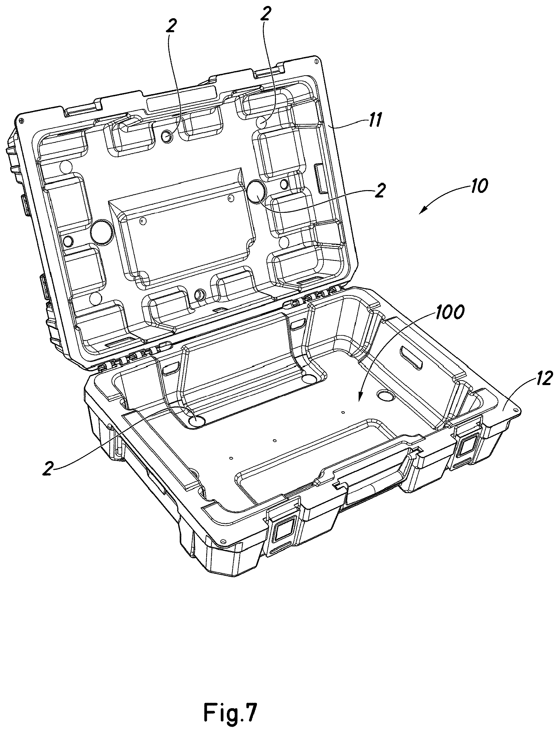

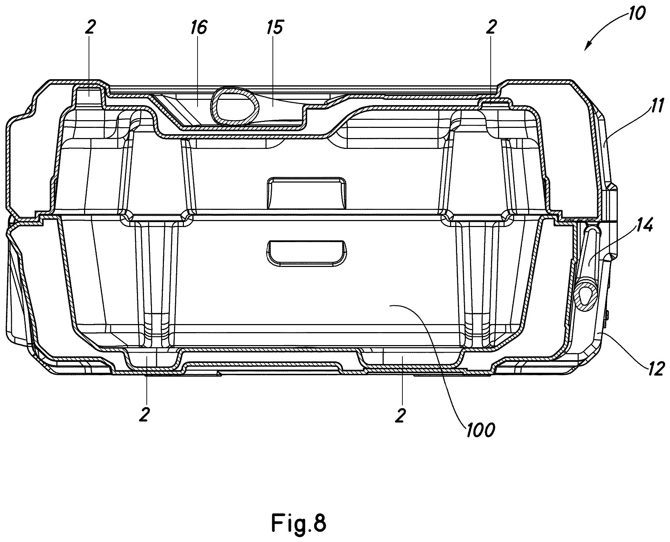

As can be seen in Fig. 7 and 8, each case has a series of contact points -2-, at which the walls which form both the top part -11- and the bottom part -12- and which produce a storage space -100-. At the contact points -2-, the walls of said double wall of the parts are in contact with one another. The walls at the contact points may not be in contact with one another, in which case they are separated by less than 1 mm. Alternatively, the walls may not only be in contact, but can also be merged together. In the figure, the contact points can be seen as indentations in the internal wall.

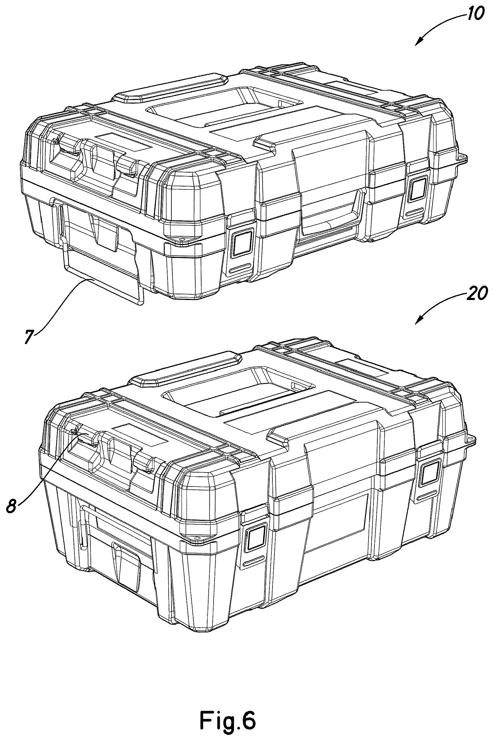

The system for locking cases together is located on both sides of the stack and can be seen in Fig. 1, 2, 5 and 6. The locking system comprises laterally positioned handles -7- that are capable of rotating with respect to the cases. The handles -7- can be metal handles that are inserted into the body of the case, for example into the bottom part of the case. The rotatability of the handles provides them with two positions: an inactive position, in which the handle is received in the outer surface of the case, and an active position, in which it protrudes from the outer walls of the case, allowing it to snap into an associated locking recess in the adjacent case. In the example shown, the locking recess is defined by hook-shaped locking projections -8- on the adjacent case. To give the lock stability, all the cases have a series of positioning ridges -3- on the upper face of their top part, which ridges fit, in a matched manner, into associated positioning recesses -5- in the lower face of the bottom part of the case above. Since the ridges are arranged in parallel with the rotational axis of the handle -7- and said ridges fit into the associated positioning recesses -5- in a matched manner, cases are prevented from accidentally breaking loose.

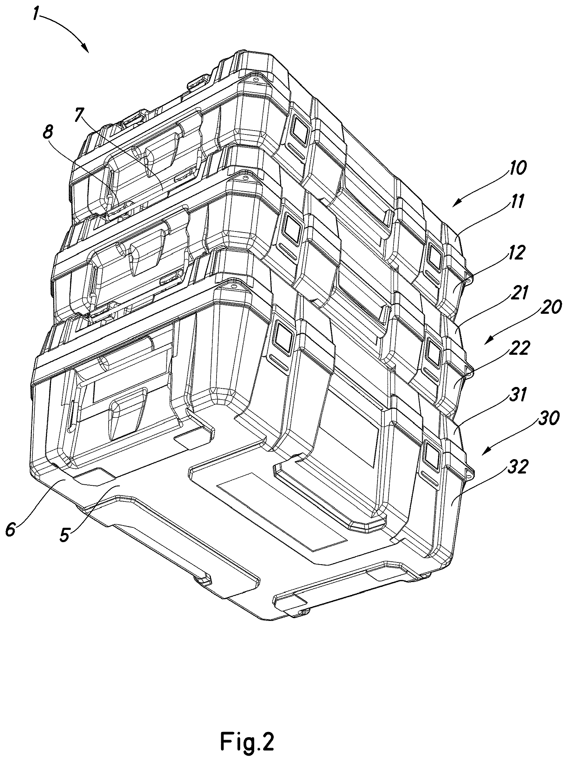

Additionally, each of the cases has additional ridges -4- that are perpendicular to, and in contact with, the aforementioned ridges. Said cases further comprise additional associated recesses -6- (see Fig. 2). Both the additional ridges -4- and the additional associated recesses -6- bring the faces at which the inter-case locks are provided into contact with the positioning ridges and recesses. This gives the stack self-positioning properties, meaning that users do not need to worry about the position of a case on the one below before actuating the mechanism for locking the cases together.

Although the invention has been illustrated and described with reference to embodiments thereof, it should be noted that these embodiments do not limit the invention, and that it is possible to alter many structural or other details that may prove obvious to persons skilled in the art after interpreting the subject matter disclosed in the present description, claims and drawings. As such, the scope of the present invention covers all variants and equivalents that may be deemed to come under the broadest scope of the following claims.

## Claims

1. Stack of at least two cases made of blow-moulded plastics, each case comprising at least a bottom part, a top part, said bottom and top parts having a blow-moulded plastics double wall, and a closure mechanism between the two parts, **characterised in that** it has locking means for joining said two cases, and **in that** said bottom and top parts of said cases have an arrangement of contact points at which the two walls forming said double wall come into contact or remain at a distance of less than 1 mm from each other.

2. Stack according to claim 1, **characterised in that** the locking means for joining said two cases comprise a rotatable handle for locking the cases together located on one of the cases, said handle being able to snap into an associated locking recess in the adjacent case.

3. Stack according to claim 2, **characterised in that** said two cases comprise a handle for locking the cases together and an associated locking recess.

4. Stack according to claim 3, **characterised in that** the handle is arranged in a bottom part and the projection is arranged on a top part.

5. Stack according to any of the preceding claims 2 to 4, **characterised in that** the associated locking recess is defined by a hook-shaped projection.

6. Stack according to any of the preceding claims, **characterised in that**, on the upper face of the top part, the lowest case of the stack comprises a set of positioning ridges, which are paired in a matched manner with associated positioning recesses in the lower face of the bottom part of the case above, so as to prevent the two cases from sliding relative to one another.

7. Stack according to claim 6, **characterised in that** the at least two cases comprise the aforementioned positioning ridges and the aforementioned associated positioning recesses.

8. Stack according to either claim 6 or claim 7, **characterised in that** said positioning ridges are arranged in a direction parallel to the rotational axis of the handle for locking the cases together.

9. Stack according to claim 8, **characterised in that** positioning ridges are additionally arranged in a direction perpendicular to the rotational axis of the handle, the aforementioned positioning ridges arranged in parallel with the rotational axis of the handle being in contact with said positioning ridges arranged in a direction perpendicular to the rotational axis of the handle.
